(19) **Europäisches Patentamt / European Patent Office / Office européen des brevets**

(11) **EP 1 964 367 B1**

(12) **FASCICULE DE BREVET EUROPEEN**

(45) Date de publication et mention
de la délivrance du brevet:
**28.11.2018 Bulletin 2018/48**

(21) Numéro de dépôt: **06847103.6**

(22) Date de dépôt: **21.12.2006**

(51) Int Cl.:
**H04L 29/06** (2006.01)

(86) Numéro de dépôt international:
**PCT/FR2006/002826**

(87) Numéro de publication internationale:
**WO 2007/071846 (28.06.2007 Gazette 2007/26)**

(54) **ROUTAGE ET OPTIMISATION DU DEBIT POINT A POINT DANS UN RESEAU AD HOC MULTISAUTS**

ROUTING UND OPTIMIERUNG DER PUNKT-ZU-PUNKT-RATE IN EINEM MULTIJUMP-AD HOC-NETZWERK

ROUTING AND OPTIMIZATION OF POINT-TO-POINT RATE IN A MULTIJUMP AD HOC NETWORK

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.12.2005 FR 0513186**

(43) Date de publication de la demande:
**03.09.2008 Bulletin 2008/36**

(73) Titulaire: **Luceor**
**92138 Issy Les Molineaux Cedex (FR)**

(72) Inventeurs:
• **DIB, Gabriel, Georges**
**F-75015 Paris (FR)**
• **CAPRICELLI, Thomas**
**F-75010 Paris (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**US-A1- 2004 185 887    US-A1- 2005 075 104**

• **DRAVES R ET AL: "ROUTING IN MULTI-RADIO, MULTI-HOP WIRELESS MESH NETWORKS" PROCEEDINGS OF THE 10TH. ANNUAL INTERNATIONAL CONFERENCE ON MOBILE COMPUTING AND NETWORKING. MOBICOM 2004. PHLADELPHIA, PA, SEPT. 26 - OCT. 1, 2004, ANNUAL INTERNATIONAL CONFERENCE ON MOBILE COMPUTING AND NETWORKING, NEW YORK, NY : ACM, US, vol. CONF. 10, 26 septembre 2004 (2004-09-26), pages 114-128, XP001235027 ISBN: 1-58113-868-7**

## Description

L'invention concerne les réseaux ou installations informatiques qui permettent les échanges de messages entre postes ou stations.

Elle concerne plus précisément, mais non de façon limitative, les réseaux dont la transmission est de type « radio-fréquence », c'est-à-dire ceux qui n'ont pas besoin de liaisons « à support matériel » comme les câbles ou fibres optiques.

Une caractéristique générale des transmissions radio fréquence est qu'elles sont limitées en portée. Cette limitation étant due principalement aux lois de la physique, elle est donc incontournable.

Pour lutter contre cette limitation l'homme de l'art propose souvent d'augmenter la puissance de transmission. Cette solution permet d'augmenter la portée mais elle se heurte aux problèmes suivants :

- Les lois physiques de la propagation conduisent à des trajets multiples de propagation et donc à des interférences produites par le signal lui-même. Il est alors souvent nécessaire de diminuer le débit de transmission,
- Souvent les règlements nationaux n'autorisent pas l'augmentation de la puissance au-dessus d'un seuil donné.

Enfin il est possible de montrer que l'augmentation de la puissance n'est pas optimale en ce qui concerne l'utilisation du spectre comme cela est montré dans l'article « The COMPOW protocol for power control in ad hoc networks : Theory, architecture, algorithm, implementation and experimentation » de S. Narayanaswamy, V Kawadia et P Kumar et présenté à European Wireless en février 2002.

Une autre solution qui est depuis longtemps bien connue de l'homme de l'art consiste à utiliser le relayage. Dans cette technique chaque noeud du réseau est susceptible de transmettre et de recevoir des paquets générés et destinés à l'unité de traitement directement relié au noeud du réseau mais aussi de prendre en charge la réception puis la retransmission de paquets en transmit d'un noeud source vers une (ou des) destinations.

De façon connue en soi, nous appellerons relais, des noeuds du réseau susceptible de prendre en charge la réception puis la retransmission de paquets transmis d'un noeud source vers une (ou des) destinations.

Depuis l'article « The capacity of wireless networks » de Gupta et Kumar publié dans IEEE Transactions on Information Theory vol. 46, no. 2, pp 388-404 en 2000, on sait que le débit maximal dans un réseau ad hoc composé de $n$ noeuds et utilisant un médium offrant une capacité de $W$ bit/s est égal, si les stations sont disposées de façon aléatoire à :

$$D = O\left(\frac{W}{\sqrt{n \log(n)}}\right)$$

Ce résultat est obtenu sous l'hypothèse d'un trafic symétrique uniformément réparti sur toutes les stations du réseau ad hoc et de destinations également réparties dans le réseau ad hoc. Cette évaluation est obtenue à partir d'hypothèses réalistes, par conséquent la portée de ce résultat est large. Si l'on souhaite augmenter ce débit, la seule possibilité reste donc l'augmentation de W ou l'utilisation d'antennes directionnelles comme présenté dans l'article « On the Capacity Improvement of Ad Hoc Wireless Networks Using Directional Antennas » de Su Yi, Y. Pei et S. Kalyanaraman présenté à MobiHoc 2003, en juin 2003 à Annapolis MD USA. Nous n'envisagerons pas ces pistes qui nécessitent une modification importante des modems radio.

On connait également le document D1 (Draves et Al. « Routing in multi-radio, multi-hop wireless mesh networks" proceedings of the 10th annual international conférence on mobile computing and networking, MOBICOM 2004, Philadelphia PA, Sept. 26-Oct 1, 2004, annual international conférence on mobile computing and networking, New York, NY: ACM, US, vol. CONF. 10, 26 septembre 2004 (2004-09-26), pages 114-128, XP001235027 ISBN: 1-58113-868-7) qui impose la condition C dans l'architecture réseau ou l'allocation des canaux de communication selon les interfaces ou alors calcule des métriques particulières qui incorporent la condition C sans explicitement la tester.

L'objet de cette invention est l'amélioration du débit point à point dans un réseau ad hoc. Donc contrairement au modèle de Kupta et Kumar, on suppose qu'à un instant donné un seul relais source transmet vers un seul relais destination.

Cette amélioration est obtenue par un procédé selon la revendication 1.

L'invention peut être mise en oeuvre selon les revendications 2 à 10.

Cette amélioration qui utilise des interfaces indépendantes permet d'obtenir dans le réseau d'avantage de transmissions simultanées et donc augmente le débit point à point.

Les interfaces utilisées dans l'invention peuvent être de tout type. Préférentiellement elles seront de type Wi-Fi (normes de la famille IEEE 802.11), de type WiMax (normes de la famille IEEE 802.16), de type Blueetoth ou Zigbee (norme de la famille IEEE 802.15). Les relais décrits dans la présente invention peuvent utiliser des interfaces de même type ou de type différent.

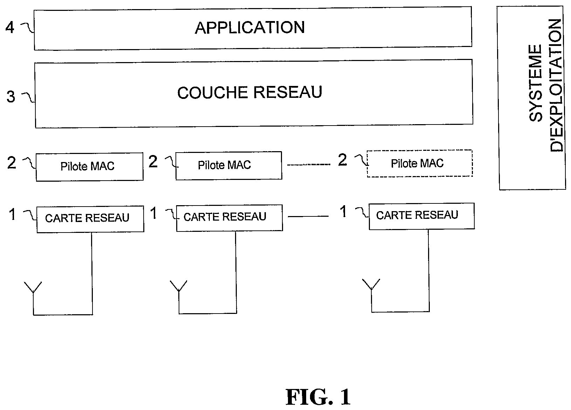

L'invention utilise l'architecture classique présentée à la figure 1. Nous retrouvons le médium de communication non représenté, des cartes réseaux également appelés modem 1, un pilote logiciel 2 permettant l'envoi et la réception de paquets par l'intermédiaires de la carte réseau. Nous trouvons ensuite un étage réseau 3. L'application 4 qui va utiliser les services de transmission du relais est en interface avec l'étage réseau 3.

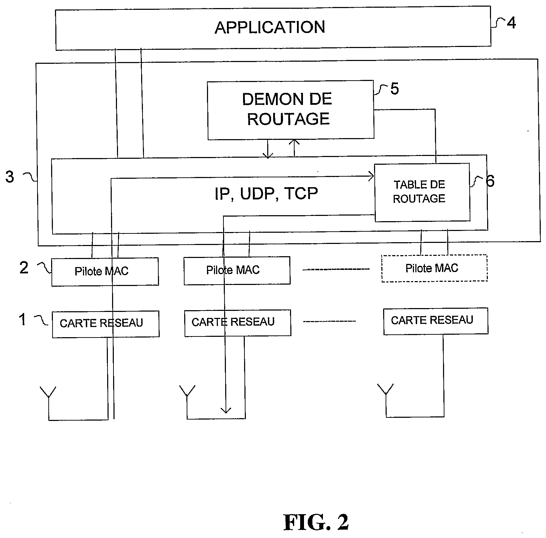

De façon préférentielle mais non restrictive l'invention s'appuiera sur l'architecture d'un routeur IP telle que présentée par la figure 2. Cette figure détaille la couche réseau dans le modèle IP classique de l'Internet classique. Nous distinguons dans cette couche réseau les couches de logiciel IP classiques incluant les protocoles UDP et TCP qui sont utilisés par les applications les plus répandus. Nous trouvons également dans cette couche réseau la table de routage 6. Cette dernière est mise à jour par un démon de routage 5.

L'invention pourra également s'appuyer sur une architecture de relayage au niveau MAC. Une telle architecture et les fonctionnalités associées sont décrites dans le brevet FR 2 778 809 par exemple sur la figure 3. Cette architecture fait également apparaître une table de routage au niveau d'un driver intermédiaire 7. Cette table contient des adresses MAC (ou de niveau 2)). Cette architecture nécessite une encapsulation des paquets et une modification de certains champs du paquet lors du relayage, ces opérations sont décrites dans le brevet 2 778 809.

Il convient de rappeler que le but d'un protocole de routage est de permettre à un paquet en route vers un destinataire de trouver son chemin vers ce noeud. Les protocoles de type routage par la source (source routing) indiquent au départ du paquet la route complète vers le noeud destination ; les protocoles de type saut par saut (hop by hop) se contentent de fournir à chaque saut sur la route d'un paquet le saut suivant vers la destination comme cela est expliqué dans le livre « Le routage dans l'Internet » de Christian Huitema publié chez Eyrolles en 1996. L'invention utilisera préférentiellement un protocole de routage de type saut par saut de type état des liens. Nous prendrons dans la suite cette hypothèse.

On distingue généralement deux types de protocoles de routage dans les réseaux mobile ad hoc : les protocoles réactifs et les protocoles proactifs.

Les protocoles réactifs ne cherchent à calculer une route qu'à la demande d'une application. Un paquet de requête est envoyé en diffusion dans le réseau à la recherche d'une route vers la destination. Le trafic de contrôle du protocole de routage est de la sorte réduit. Cependant, du fait qu'on ne dispose pas immédiatement de la route vers la destination, le délai nécessaire à l'acheminement des paquets vers la destination augmente pour l'application. Par ailleurs, une modification des couches IP est nécessaire du fait que ces dernières ne permettent généralement pas de conserver des paquets en mémoire avant que la route vers cette dernière soit créée. Le protocole AODV défini par le RFC 3561 de l'IETF Ad hoc On-Demand Distance Vector (AODV) Routing de C. E. PERKINS, E. M. BELDING-ROYER, S. R. DAS publié en juillet 2003 est un exemple de protocole proactif.

Au contraire des précédents, les protocoles proactifs entretiennent toutes les routes du réseau par l'échange de trames périodiques de contrôle. Il est possible de fournir instantanément la route vers une destination quelconque au prix de l'envoi périodique de trames contenant des informations topologiques et du calcul des routes dans chaque relais. Les protocoles proactifs fonctionnent vis-à-vis de la couche réseau comme des protocoles de routage classiques. Le protocole OLSR défini par le RFC 3626 de l'IETF : Optimized Link State Routing Protocol OLSR » de T. CLAUSEN, P. JACQUET, A. LAOUITI, P. MINET, P. MÜHLETHALER, A. QAYYUM, L. VIENNOT publié en Octobre 03. est un exemple de protocole proactif.

De façon préférentielle mais non exclusive la présente invention utilise un protocole de routage proactif.

D'autres caractéristiques et avantages de l'invention seront dévoilés à l'examen de la description détaillée ci-après avec les dessins annexés où :

- La figure 1 est un schéma très simplifié d'un relais,

- La figure 2 est un schéma très simplifié d'un relais fonctionnant avec un relayage au niveau IP,

- La figure 3 est un schéma très simplifié d'un relais fonctionnant avec un relayage au niveau MAC,

- La figure 4 représente des relais avec plusieurs interfaces,

- La figure 5 illustre la notion de route de relais et de route d'interfaces,

- La figure 6 donne un exemple de route d'un noeud source à un noeud destination suivant l'invention.

- La figure 7 illustre la notion d'interfaces indépendantes.

- La figure 8 donne une structure pour un message "Etat des liens généralisé", message est diffusé dans le réseau lors d'une mise en oeuvre l'invention,

- La figure 9 donne une structure pour un message "Route d'interface", message qui doit être diffusé dans le réseau pour mettre en oeuvre l'invention,

- La figure 10 donne illustre le traitement suivant l'invention d'un paquet à relayer,

- La figure 11 illustre une modification du paquet MID (Multiple Interface Declaration) d'OLSR donnant les caractéristiques des interfaces des relais.

- La figure 12 illustre un mode de réalisation de l'invention qui utilise un protocole de routage qui entretient la table de routage et un module d'optimisation qui permet la sélection de route « améliorée » dans la table de routage.

- La figure 13 donne l'algorithme de relayage des paquets dans un mode de réalisation de l'invention où le réseau dispose de plusieurs fréquences et ces dernières sont utilisées lors du relayage d'un paquet suivant une permutation.

- La figure 14 illustre un format de requête de route pour un protocole réactif.

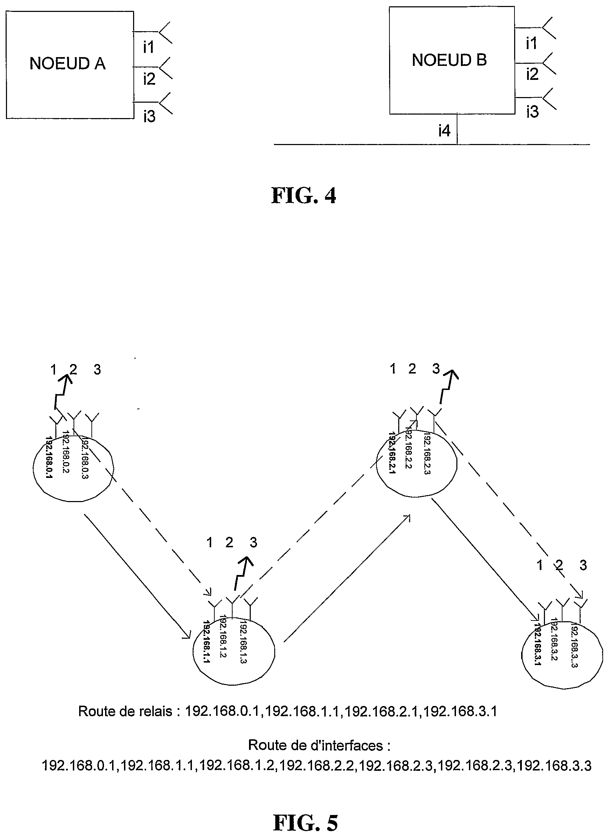

Dans un réseau ad hoc, il est possible de disposer dans un même noeud de plusieurs interfaces. Par exemple sur la figure 4 nous avons représenté deux relais. Le relais de gauche sur la figure est muni de trois interfaces sans fil, i1, i2, i3, celui de gauche de quatre interfaces i1,i2,i3: trois interfaces sans fil et une interface filaire i4.

Par convention dans la description de cette invention, nous choisirons une interface particulière que nous nommerons interface principale, les autres interfaces seront nommées interfaces secondaires. Chaque interface sera repérée par une adresse. Par convention l'adresse de l'interface principale, dite « adresse principale », sera aussi l'adresse du noeud. Préférentiellement les adresses utilisées seront des adresses IP mais ces adresses pourront également être des adresses IEEE ou tout autre type d'adresse.

Nous conviendrons également des définitions suivantes:

    1. Une route de relais: une route de relais est une suite d'adresse principale qui est un chemin entre deux relais du réseau ad hoc,

    2. une route d'interface : une route d'interface est une route d'adresse secondaire ou principale fournissant une route entre deux noeuds du réseau ad hoc.

Des exemples de routes de relais et de routes d'interfaces sont donnés sur la figure 5. Par exemple nous avons la route de relais : 192.168.0.1,192.168.1.1,192.168.2.1,192.168.3.1 et la route de d'interfaces:192.168.0.1,192.168.1.1,192.168.1.2,192.168.2.2, 192. 168.2.3,192.168.2.3,192.168.3.3.

Pour cette dernière nous appellerons les interfaces : 192.168.0.1, 192.168.1.2, 192.168.2.3 les interfaces d'émission de cette route d'interface, correspondant aux interfaces qui transmettent les données sur la route.

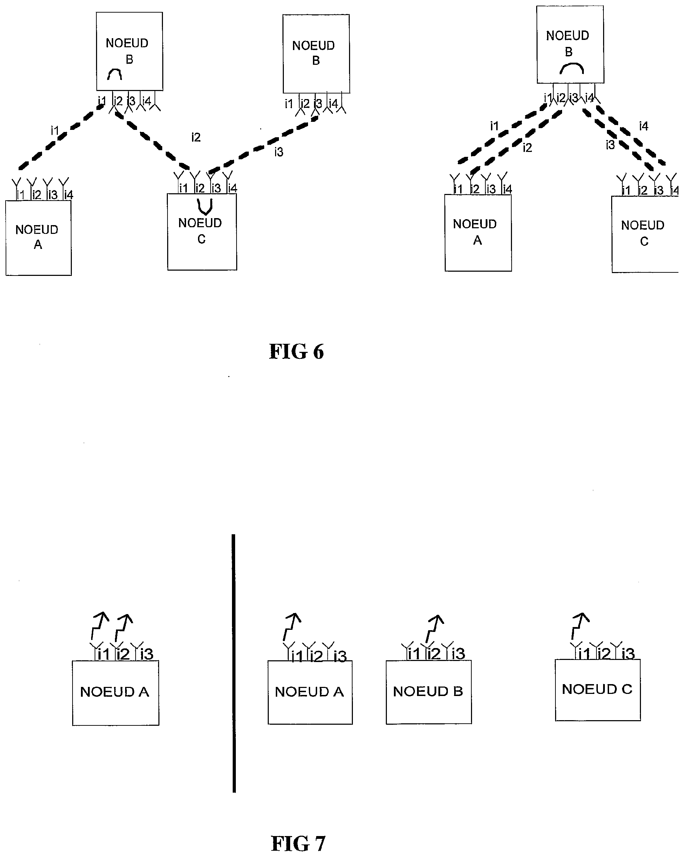

Illustré figure 6 à gauche, supposons que les quatre noeuds A, B, C et D disposent de quatre interfaces i1,i2,i3,i4 fonctionnant sur des fréquences distinctes suffisamment éloignées et que la route du noeud A vers le noeud D passe par B puis C. On comprend aisément qu'un protocole de routage peut optimiser le débit entre A et D en utilisant la première interface (i1) pour aller de A vers B, la seconde interface (i2) pour aller de B vers C et enfin la troisième interface (i3) pour aller de C vers D. En effet les transmissions de A vers B, de B vers C et de C vers D peuvent être simultanées si les fréquences sont suffisamment éloignées. Sur la figure 6 de droite, nous pouvons voir dans les mêmes conditions une route améliorée entre les noeuds A et C. Cette route utilise les interfaces (i1) et (i2) pour rejoindre le noeud relais B, puis les interfaces (i3) et (i4) pour rejoindre le destinataire C. Comme les interfaces (i1) et (i2) du noeud A sont indépendantes, le débit entre A et B peut être amélioré si l'utilisation des interfaces i1 et i2 est bien coordonnée.

Nous dirons qu'une interface est indépendante d'une autre interface lorsque ces deux interfaces peuvent transmettre simultanément ; ces deux actions simultanées étant assuré du succès ce qui signifie une transmission réussie vers le destinataire des transmissions avec une probabilité proche de 1. Cette notion d'indépendance est valable dans un même relais mais elle a également un sens dans le cas de deux interfaces de relais distincts dans ce cas la position relative des stations et la portée des transmissions doivent être considérées. Ainsi sur la figure 7 les flèches brisées représentent des possibilités de transmissions simultanées. nous voyons que sur le réseau de gauche l'interface i1 et l'interface i2 sont indépendantes sur le même relais A ; nous voyons sur le réseau de droite deux interfaces indépendantes sur des relais distincts A et B. Comme sur le réseau de droite les noeuds A et C sont éloignés de sorte que ceux-ci bénéficient du phénomène de réutilisation spatiale, les interfaces i1 des relais A et C sont indépendants.

Pour simplifier la détermination des interfaces indépendantes on pourra supposer que la possibilité pour deux interfaces de transmettre simultanément est équivalente à celle de transmettre et de recevoir simultanément.

Dans l'exposé de l'invention nous aurons besoin d'outils permettant de valider si deux interfaces sont indépendantes. Nous en présentons les plus importants dans les paragraphes qui suivent.

Nous commencerons à considérer d'abord uniquement des interfaces radio et nous supposerons que les relais sont munis d'antenne omnidirectionnelle.

Deux interfaces radio fonctionnant sur des fréquences différentes suffisamment éloignées seront indépendantes. Pour déterminer précisément l'éloignement requis, il conviendra de consulter les profils fréquentiels de transmission et les caractéristiques des filtres à la réception.

Un second cas est quand les deux interfaces radio utilisent des antennes induisant des polarisations indépendantes. Si les polarisations sont orthogonales et en considérant un éloignement suffisant des antennes de chaque interface les deux interfaces seront indépendantes.

Un troisième cas est quand les deux interfaces radio utilisent des codes d'étalement de spectre orthogonaux ; les mathématiques discrètes permettent de générer des codes orthogonaux optimisés (séquence de Gold, séquence de Kasami...) . Suivant les propriétés des codes utilisés sur les interfaces on pourra déterminer si les deux interfaces sont indépendantes.

Supposons maintenant que nous disposions de deux interfaces de même caractéristique et fonctionnant avec la même technique de modulation et opérant à la même fréquence. Il va cependant être possible que ces deux interfaces soient indépendantes. Pour cela il faudra qu'elles soient suffisamment éloignées l'une de l'autre. On considère en général que les deux interfaces doivent être séparées en terme de nombre de sauts de trois à six sauts radio. Pour justifier ce résultat il faut utiliser des modèles quantitatifs. Il faut d'abord représenter la propagation du signal. En général, on utilise une loi de propagation où l'intensité de la puissance reçue décroît en fonction de la distance $d$ entre source et destination en $1/d^{\alpha}$. Un second modèle donne les conditions suivant lesquelles un paquet est convenablement reçu en fonction des autres transmissions concurrentes, il faut que le rapport de l'intensité du signal de la source par l'interférence soit supérieur à un seuil donné. Faute de l'utilisation d'un modèle analytique de propagation on peut directement exploiter un modèle prédictif de propagation relative à la zone de déploiement du réseau. De tels modèles sont couramment utilisés par les intégrateurs de réseau.

Dans les calculs sur les interfaces on pourra utiliser les données de puissance des noeuds du réseau.

Supposons maintenant que les interfaces radio considérées soient reliées à des antennes directionnelles. Si les secteurs de transmission sont disjoints, alors les interfaces seront indépendantes.

Enfin nous considèrerons qu'une interface radio et une interface filaire sont indépendantes.

Nous supposerons dans notre description de l'invention qu'un relais peut disposer jusqu'à n interfaces. Chaque interface porte un numéro entre 1 et n.

L'invention fonctionne préférentiellement, mais de façon non exclusive, avec un protocole de routage proactif de type état des liens. Lors de la description de la présente invention nous utiliserons parfois le protocole OLSR que nous allons très brièvement décrire en insistant sur la gestion des interfaces multiples. Dans ce protocole, comme dans tout protocole proactif, on distingue en règle générale deux fonctions.

La première fonction concerne la gestion du voisinage des noeuds ; la seconde fonction concerne la dissémination de ces voisinages. La gestion du voisinage permet à un noeud de connaître la liste de ses voisins. La dissémination de cette liste de voisins permet de faire connaître cette liste à tous les noeuds du réseau. Une fois cette connaissance acquise il sera facile à chaque de disposer d'une connaissance complète de la topologie du réseau.

Le protocole OLSR utilise principalement deux types de messages de contrôle pour construire la topologie.

Le premier type de message appelé « hello » va permettre de construire le voisinage des noeuds. Un noeud A est voisin d'un noeud B s'il existe un lien symétrique entre A et B sur au moins une interface i ; A entend donc les hellos de B et vice et versa. OLSR gère toutes les interfaces d'un noeud. Par conséquent dans OLSR, chaque noeud dispose potentiellement de toutes les routes d'interface vers ses voisins, mais ces routes ne sont pas forcément reportées par OLSR dans la table de routage. Le message « hello » est local et il n'est pas relayé à réception par les noeuds du réseau.

Le second type de message appelé « TC » (« Topology Control » en langue anglaise) va permettre à un noeud de faire connaître dans tout le réseau son voisinage. Le message TC qui contient la liste de ses voisins (ou plus exactement un sous-ensemble) est envoyé en diffusion dans le réseau, il est donc relayé. Le TC envoyé par un relais ne comporte que l'adresse principale de ses voisins. Pour pouvoir associer à un noeud toutes ses interfaces IP, il sera nécessaire de disposer d'un message particulier qui permette d'associer l'adresse d'interface principale d'un noeud et toutes ses adresses d'interface secondaire. OLSR utilise pour cela le message MID (Multiple Interface Déclaration), ce message dresse la liste des interfaces disponibles dans un même noeud, il est envoyé en diffusion dans tout le réseau.

Dans le protocole OLSR, un noeud (considéré comme source potentielle) pourrait fournir toutes les routes d'interface vers ses voisins, néanmoins OLSR ne peut optimiser le choix des interfaces sur un chemin vers une destination pour optimiser le débit.

Nous avons vu qu'à l'arrivée dans un relais d'un paquet (à relayer) sur une interface, il sera avantageux de retransmettre sur une interface indépendante. En effet l'utilisation de deux interfaces indépendantes permet une activité (transmission ou réception) simultanée sur les deux interfaces. Du fait de la propagation des ondes radio, il sera avantageux également si pour deux relais $R_i$ et $R_{i+1}$ sur le chemin d'une source vers une destination pour un paquet donné l'interface de transmission de $R_{i-1}$ pour ce paquet est également indépendante de l'interface d'émission de $R_{i+1}$. Si cette propriété n'est pas vérifiée, il y aura des collisions cachées sur le relais $R_i$. Ce phénomène intervient quand deux relais éloignés utilisent la même interface de transmission et provoquent ainsi une collision dans un relais qui se trouve entre ces deux relais. Ces collisions sont difficiles à résoudre car la détection de porteuse ne fonctionne pas. Pour résoudre ces collisions, il est en général nécessaire de recourir à des techniques de type protocole Aloha qui sont souvent bien moins efficaces que les techniques de détection de porteuse comme cela est montré dans le chapitre 3 du livre « Data Networks » écrit par MM. Bertsekas et Gallager et publié chez Prentice Hall en 1987.

Il est possible de généraliser cette propriété, l'amélioration du débit en point à point dans un réseau ad hoc sera donc obtenue lorsque toute paire d'interfaces d'émission sur la route d'interface entre la source initiale et la destination finale est constituée d'interfaces indépendantes. Nous appellerons B cette condition. Pour diverses raisons telles que manque de spectre radio, nombre insuffisant d'interfaces disponibles par relais (n trop petit), il est possible qu'il ne soit pas possible de satisfaire la condition B. On pourra alors chercher à satisfaire la condition C selon laquelle toute paire d'interfaces sur une partie de la route d'interface entre la source initiale et la destination finale est constituée d'interfaces indépendantes. Si la condition B (qui est un cas particulier de la condition C) ne peut être satisfaite et qu'on doive considérer la condition C, il convient de définir préalablement pour tous les noeuds du réseau la « partie » de la route qu'on considère, par exemple un nombre défini de noeuds consécutifs sur la route...

Il est aussi possible que l'on ne puisse pas, de toute façon, satisfaire la condition C pour toute paire de noeuds source, destination ou que l'on souhaite « durcir » la condition C pour améliorer le débit pour quelques paires de noeud du réseau quitte à ne pouvoir satisfaire cette condition pour tous les paires de noeud du réseau. L'invention peut cependant rester avantageuse si elle permet d'améliorer la transmission pour plusieurs paires noeud source, noeud destination mais on doit, dans ce cas, pouvoir tolérer que la condition C ne soit pas satisfaite pour tous les couples noeud source, noeud destination.

Selon l'invention on construit dans un réseau ad hoc des routes d'un noeud source vers un noeud destination satisfaisant la condition C.

On fournit dans ce qui suit un exemple des procédés permettant au protocole de routage de satisfaire la condition C pour tout chemin dans le réseau. Ceci pose trois difficultés. D'abord les protocoles de routage ne disposent pas en général des routes d'interfaces du réseau. Ensuite les messages de contrôle qui servent à établir les routes ne contiennent pas les informations sur les interfaces susceptibles d'autoriser la construction de route d'interface satisfaisant la propriété C. Enfin un protocole de routage optimisé pour le débit point à point doit permettre de satisfaire une condition globale (condition C) alors que ce dernier prend uniquement une décision locale.

Par exemple si le protocole OLSR dispose des éléments pour calculer localement une route de relais vers tous les noeuds du réseau (mais ce calcul n'est, en général, pas fait par le démon qui calcule uniquement l'adresse du prochain relais vers la destination), ce dernier ne dispose pas des informations suffisantes pour calculer localement les routes d'interface.

On décrit maintenant des exemples détaillés de la présente invention.

Il n'existe pas de protocole de routage proactif de type état des liens susceptible de fournir les routes d'interface d'un noeud source vers un noeud destination correspondant à une route de relais donnée et les informations relatives aux interfaces sur cette route. Ceci provient du fait que dans les protocoles de type état des liens existants le voisinage d'un noeud est indiqué uniquement à l'aide de l'adresse principale des relais voisins. Les messages de contrôle des protocoles existants ne contiennent pas non plus d'information sur les caractéristiques des interfaces d'un relais.

L'invention utilise préférentiellement un mode de routage de type hop by hop qui est celui le plus répandu et un protocole de routage proactif de type état des liens. L'invention va également réutiliser la détection de voisinage défini dans le protocole OLSR. Ainsi il sera possible pour deux relais du réseau de savoir s'il existe un lien symétrique entre deux de leurs interfaces au moyen de l'échange de message hello.

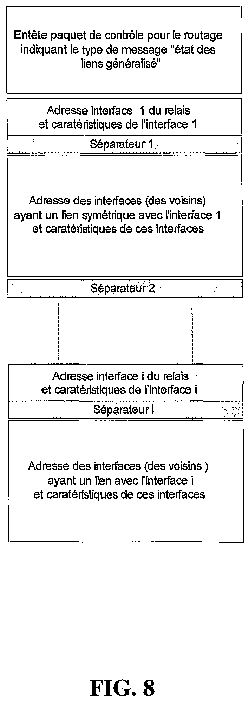

Contrairement à l'art antérieur, un noeud diffuse dans le réseau en sus de la liste de ses voisins (ou d'un sous-ensemble) qui est envoyé classiquement par les protocoles de type état des liens pour chacun de ses voisins, la liste des interfaces qui permettent de réaliser le lien avec ce voisin ainsi que la caractéristique de ces interfaces. Cette caractéristique comporte toute information fréquence, modulation, secteur de transmission, position du relais susceptible de permettre de valider si les interfaces sur une route sont indépendantes en utilisant les moyens que nous avons décrits précédemment. Cette information est agrégée au sein d'un message qui peut prendre une forme telle que représentée sur la figure 8. Dans ce message nous trouvons d'abord l'adresse de la première interface du relais, la caractéristique de cette interface puis toutes les interfaces qui offre un lien symétrique avec cette première interface ainsi que les caractéristiques de toutes ses interfaces. Ce message se poursuit à l'identique en considérant toutes les interfaces du relais. Nous appellerons ce message « état des liens généralisé »

L'homme de l'art reconnaîtra dans ce message d'état des liens généralisé une généralisation du message TC du protocole OLSR ou plus généralement du message état des liens d'un protocole proactif. Comme dans le protocole OLSR, l'invention pourra avantageusement utiliser des optimisations susceptibles d'améliorer la diffusion et le contenu du voisinage de chaque relais envoyé dans le message « état des liens généralisés ». Par exemple l'optimisation des relais multipoint utilisée par OLSR pourra être utilisé dans l'invention. L'heuristique de sélection de ces relais multipoint donnée (MPR computation) en page 38, 39 et 40 du RFC 3626 de l'IETF pourra avantageusement être aussi exploitée pour déterminer un ensemble de relais multipoints d'un relais.

À réception de ces messages le protocole de routage peut facilement calculer pour tout couple de noeuds du réseau les routes d'interface susceptibles de joindre les deux noeuds et satisfaisant la condition C. A défaut d'un algorithme plus efficace, le protocole d'optimisation du routage pourra évaluer exhaustivement toutes les routes d'interface et ne retenir que celles qui satisfont à la condition C.

Nous chercherons de préférence les routes satisfaisants la condition C parmi les routes de plus court chemin (en terme de nombre de sauts), si plusieurs routes satisfaisant la condition C existent, l'algorithme choisira préférentiellement une route de plus court chemin.

Si les noeuds source initial et destination finale ne sont pas trop éloignés, on pourra avoir une route satisfaisant la condition C et qui fasse apparaître entre deux noeuds successifs sur la route plusieurs interfaces d'émission. Lors de la transmission d'un paquet du noeud source initial vers le noeud destination finale, ces interfaces pourront être utilisées suivant un choix arbitraire. Ceci améliorera le débit car ces interfaces sont par définition de la condition C indépendantes. Ceci correspond à la route représentée sur la figure 6 droite. Si les interfaces sont de même caractéristiques, il pourra être avantageux d'utiliser pour un flux de paquets les interfaces disponibles à tour de rôle. Par ailleurs toujours dans le cas d'interfaces de même caractéristique, il pourra être avantageux que sur la route entre source et destination, le nombre d'interfaces d'émission indépendantes utilisables à chaque saut soit identique.

Si un noeud ne parvient pas à satisfaire la condition C pour une route, il pourra tout simplement choisir une route quelconque éventuellement la plus proche de la condition C.

Il convient maintenant de s'assurer que le protocole de routage sollicité à chaque saut pour déterminer l'interface de relayage va être capable de fournir pour un paquet en transit d'un relais source vers un relais destination une route d'interface satisfaisant la condition C.

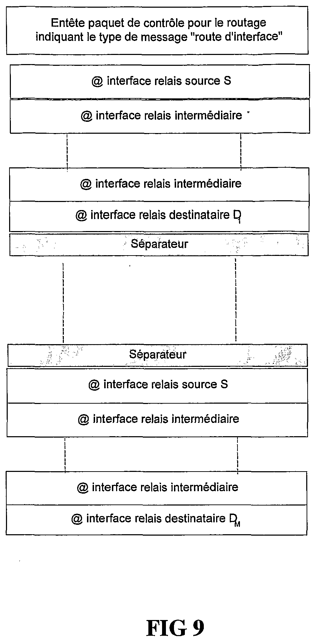

Suivant un premier moyen de l'invention, chaque noeud du réseau diffuse dans le réseau ad hoc les routes d'interface vérifiant les conditions C dont il dispose pour toutes les routes dont il est le noeud source. Le format des messages est représenté sur la figure 9. Les routes d'interface diffusées comportent l'adresse de l'interface d'envoi pour le relais source, les adresses des interfaces des noeuds intermédiaires sur le chemin vers la destination finale. Il pourra être pratique d'utiliser les interfaces principales des noeuds source et destination pour repérer une route dans la table de routage. Si un noeud n'est pas parvenu à satisfaire la condition C il devra néanmoins diffuser la route qu'il a sélectionnée.

Suivant ce premier moyen, le module de routage suivant l'invention consulte les routes d'interfaces diffusées et en fonction des interfaces source et destination procède au choix de l'interface suivante sur la route vers la destination.

Ce premier moyen de l'invention nécessite l'envoi par tous les noeuds du réseau des routes satisfaisant la condition C. Par ailleurs chaque noeud doit maintenir une route d'interface pour tout couple de noeuds source destination.

Suivant le second moyen de l'invention, chaque noeud va calculer indépendamment une ou plusieurs routes d'interface vers tout noeud destination du réseau satisfaisant la condition C. Comme précédemment chaque noeud pourra procéder à l'énumération exhaustive de toutes les routes d'interfaces envoyées dans les paquets de contrôle et à la sélection des routes satisfaisant à la condition C. Il sera nécessaire que ce calcul puisse aboutir à des routes d'interface qui soient les mêmes lorsqu'elles sont calculées par deux relais distincts du réseau.

Il est possible d'obtenir cette propriété en utilisant les mêmes règles de calcul dans chaque noeud pour établir les routes satisfaisant à la condition C. La même implémentation de l'algorithme de calcul des routes d'interface devra être utilisée avec les mêmes règles de parcours des tables, les mêmes règles de rangement des adresses dans ces tables et les mêmes règles de sélection dans le cas de route multiple.

Si l'on utilisait explicitement le protocole OLSR, lors du calcul des routes vers les noeuds à deux sauts, il faudra utiliser uniquement comme relais uniquement les multipoints relais et non tous ses voisins. Ce faisant le noeud local et un noeud distant utiliseraient les mêmes informations pour bâtir les routes d'interface et si tous les noeuds utilisent les mêmes conventions en cas de choix multiple chaque noeud aboutira aux mêmes routes d'interface satisfaisant la condition C. On peut noter que cette approche de calcul des routes diffère sensiblement de l'approche du RFC 3626 p 48 pour le calcul des routes vers les voisins à deux sauts.

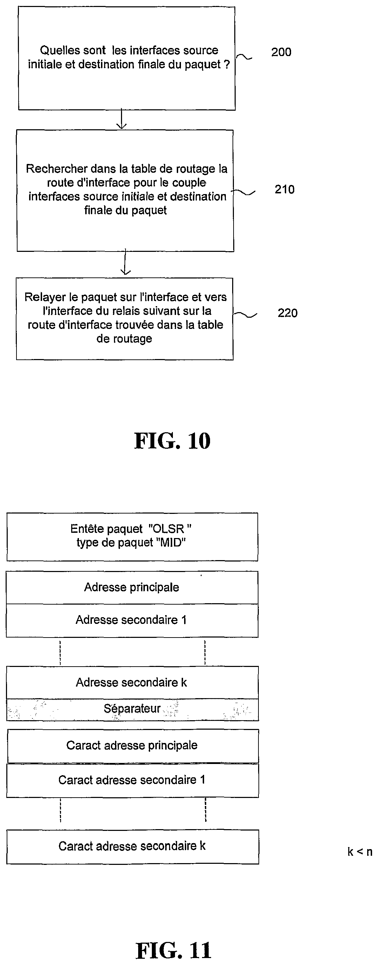

L'algorithme de routage d'un paquet est représenté sur la figure 10. Après que le relais ait identifié 200 les interfaces source initiale et destination finale de ce paquet et si le paquet n'est pas arrivé à destination, il va chercher 210 dans la table de routage l'adresse de l'interface d'envoi et l'adresse de l'interface du prochain saut sur le chemin en fonction du noeud source initiale et du noeud destination finale. Il relaie ensuite ce paquet 220.

Dans un mode particulier de réalisation, les interfaces des relais du réseau utilisent les mêmes techniques de transmission : modulation, fréquence, puissance, technique d'accès ...avec des antennes omnidirectionnelles et que le spectre radio est peu perturbé. On suppose en outre l'utilisation d'un protocole de routage proactif de type état des liens similaire à OLSR. Ce protocole possède donc un module permettant de détecter ses voisins (noeud avec lequel on possède un lien symétrique sur au moins une interface) et permet aussi de connaître le voisinage des noeuds distants sans pour autant pouvoir connaître précisément tous les liens existants entre deux noeuds distants. La connaissance des caractéristiques des interfaces des relais telles que la fréquence utilisée... peut permettre de décider s'il existe un lien entre deux interfaces de deux relais voisins du réseau (c'est-à-dire possédant déjà un lien symétrique sur une interface) sans que cette information ne doive être fournie dans le message d'état des liens généralisé. Si l'on utilise le protocole OLSR, ces informations pourraient être simplement ajoutées au message MID (Multiple Interface Declaration) ou au message TC. Cette information pourra être envoyée suivant le format du message de la figure 11.

Cette étape correspond à une acquisition « simplifiée » des liens entre les interfaces des noeuds et des caractéristiques de celles-ci. En effet l'existence d'un lien (symétrique) sur une interface et la déclaration des caractéristiques des interfaces des relais constituant ce lien ajouté dans le message MID permet d'en déduire les liens entre ces deux relais.

Le protocole de routage sera alors à même de calculer toutes les routes d'interfaces et pourra ne retenir que celles qui satisfont à la condition C. Nous supposerons que dans chaque relais du réseau les interfaces de même nature caractéristique sont repérées par le même indice. On pourra comme précédemment soit diffuser ces routes dans le réseau de façon à ce que chaque noeud dispose des mêmes routes d'interface satisfaisant la condition C soit utiliser un calcul coordonné dans chaque noeud des routes d'interface satisfaisant la condition C. Le protocole de routage pourra alors router un paquet en consultant son adresse source initiale et destination finale. Cette information lui indiquera la route d'interface à suivre.

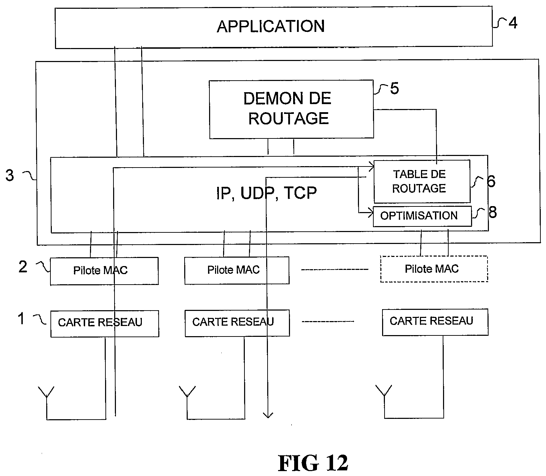

De façon encore plus spécifique, si nous supposons que les relais du réseau disposent chacun de *n* interfaces et que ces *n* interfaces utilisent des fréquences distinctes et donc constituent des interfaces indépendantes quelle que soit la position des noeuds. Il conviendra de supposer en plus que *n* est suffisamment grand de sorte qu'une même fréquence puisse être réutilisée après *n* sauts. Considérons alors qu'une permutation $\sigma$ de {1,2,..,*n*} choisi à l'avance et connue de tous les relais du réseau. Il suffira que sur un chemin de propagation le numéro des interfaces utilisées dans chaque relais soit conforme à la permutation $\sigma$. Pour implémenter ce mécanisme, il conviendra de pouvoir déterminer l'interface de réception d'un paquet. Le module d'optimisation n'a alors uniquement qu'à trouver l'interface suivante en fonction de la permutation $\sigma$. L'invention peut alors fonctionner sous forme d'un module d'optimisation 8 qui va fonctionner en complément des informations de routage fourni par le protocole comme cela est représenté sur la figure 12. Le module d'optimisation 8 est alors apte à choisir parmi les routes fournies par la table de routage 6. Une alternative à l'utilisation de l'interface de réception pour calculer l'interface réémission du paquet est d'utiliser le champ H = hop count du paquet IP, on pourra alors utiliser l'interface I+H modulo n pour relayer le paquet. I est l'indice de l'interface d'émission du noeud source initial.

L'utilisation de la permutation $\sigma$ ou du champ hop compte correspond de façon générale à l'étape de choix parmi la pluralité de route existante d'une route satisfaisant la condition C.

L'invention pourra alors utiliser le protocole OLSR pour remplir les tables de routage. Il faudra néanmoins compléter dans ce dernier le calcul des tables de routage. En effet le protocole OLSR ne reporte dans la table de routage qu'une interface vers le noeud suivant en direction du noeud destinataire final. Il sera nécessaire de connaître toutes ces interfaces pour implémenter l'invention.

Lorsqu'OLSR calcule la route vers un noeud il s'arrête dès qu'un lien vers le noeud suivant en direction de la destination finale est trouvé. Il sera nécessaire pour l'invention de faire figurer toutes les routes d'interfaces. Pour cela on pourra modifier l'algorithme proposé dans le RFC 3626 p 47 et suivantes.

D'abord pour les noeuds voisins si dans la table de routage, il n'existe pas d'entrée : *R_dest_addr* valant l'adresse principale d'un noeud voisin, alors de nouvelles entrées dans la table de routage doivent être ajoutées avec :

*R_dest_addr = adresse principale du voisin en question;*

*R_next_addr = L_neighbor_iface_addr, adresse principale de ce noeud voisin;*

*R_dist = 1;*

*R_iface_addr = L_local_iface_addr, adresse d'interface du lien entre le noeud local et son noeud voisin, cette adresse est à chercher dans la table des liens.*

Il y aura, dans la table de routage, autant d'entrées pour un même voisin qu'il n'y a, dans la table des liens, d'entrées avec le statut symétrique.

Comme dans les pages 48 et suivantes du RFC 3626 on calculera pas une récurrence montante les routes pour les noeuds à distance supérieure ou égale à 2. Pour chaque adresse destination, on enregistrera autant d'entrées dans la table de routage qu'il n'y a d'adresses d'interface dans la table des liens pour rejoindre le relais suivant dans la route vers la destination.

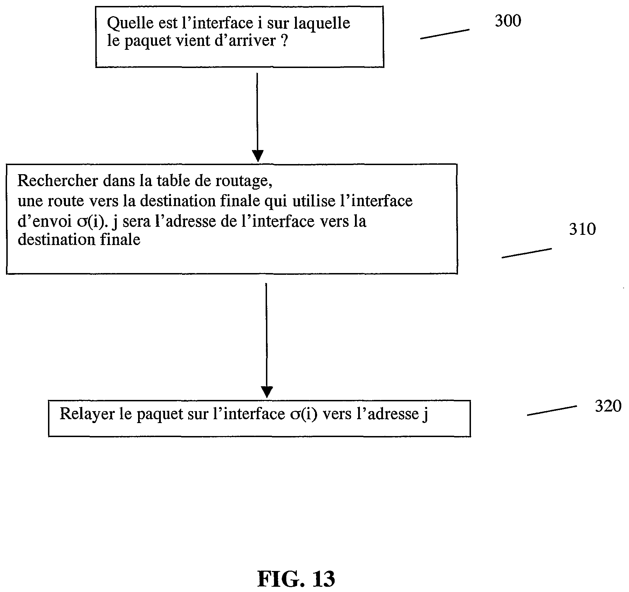

Un algorithme mis en oeuvre au niveau du module d'optimisation du routage est représenté sur la figure 13. Suite à la détection 300 de l'interface d'arrivée, il permet de choisir, si le paquet n'est pas arrivé à destination) 310 l'interface d'envoi et l'adresse du saut suivant vers la destination finale. L'interface d'envoi est obtenue facilement en fonction en fonction de l'interface d'arrivée i du paquet ; c'est a(i). L'adresse du saut suivant vers la destination finale : j est obtenue dans la table de routage en cherchant la route vers le noeud destinataire final qui utilise l'interface $\sigma$(i). Le paquet est alors relayé 320 sur l'interface d'envoi vers le saut suivant d'adresse j.

Comme nous l'avons déjà vu pour les précédents algorithmes, il est possible qu'il n'existe pas d'entrée dans la table de routage vers le noeud destination et utilisant l'interface d'envoi $\sigma$(i). Dans ce cas une autre interface apparaissant dans la table de routage et offrant une route vers le noeud destinataire final sera utilisée.

L'invention pourra utiliser dans les relais un système d'exploitation courant comme Free BSD, Linux ou encore OpenBSD. Dans le cas de l'utilisation de Linux, l'outil IPtable convient parfaitement pour capturer l'interface d'arrivée du paquet et permet facilement de faire dépendre l'interface de relayage de l'interface d'entrée du paquet.

Dans le cas où le noeud source et le noeud destination sont distants de $D$ sauts avec $n/D=L\geq2$ on peut encore améliorer le débit point à point entre les deux noeuds. Pour ce faire on pourra utiliser une permutation cyclique $\sigma'$ de $D$ groupes comportant chacun $L$ interfaces. L'amélioration du débit sera obtenue ainsi sur le premier saut, le paquet sera envoyé sur une des interfaces dans le groupe d'interface $\sigma'(1)$, au second saut sur une interface dans le groupe d'interface $\sigma'^2(1)$ ... Ainsi il sera possible sur un saut de la route des transmissions sur des interfaces indépendantes.

Il est aussi possible que le noeud destinataire n'utilise pas le protocole OLSR mais soit par exemple relié à un routeur OLSR qui possède une interface Wifi fonctionnant en mode point d'accès ou simplement en mode ad hoc Wifi. Il est possible à OLSR d'indiquer une route vers la destination en utilisant le message HNA (Hello Neighbor Advertisement) qui annonce l'accessibilité à un sous réseau IP. Il serait souhaitable que les routes d'interface du noeud source vers le noeud destination satisfassent la condition C y compris si l'on considère le dernier saut qui est fait en mode Wifi et qui n'apparaît pas directement dans la table de routage.

Suivant l'invention et pour répondre à ce besoin, le routeur OLSR qui porte également d'autres interfaces sans fil dont les clients sont annoncés par le paquet HNA envoie la caractéristique de l'interface Wifi déclarée par le paquet HNA. Cette caractéristique peut avantageusement être envoyée avec le message HNA.

Le protocole de routage calcule les routes d'interface satisfaisant la condition C. Comme précédemment suivant une première variante de l'invention la source du paquet peut diffuser ses routes d'interface en y incluant celles qui se terminent vers des interfaces Wifi annoncées par des HNA. Suivant une seconde variante, les noeuds calculent indépendamment mais avec le même algorithme et les mêmes conventions, les routes d'interfaces vers tous les noeuds du réseau y compris ceux annoncés par un HNA Wifi et sélectionnent de façon identique des routes de d'interface existantes une route d'interface satisfaisant la condition C. Ce calcul suit les mêmes règles que le calcul des routes de relais dans le protocole de routage OLSR. C'est cette route d'interface ainsi sélectionnée qui est utilisée pour relayer le paquet de la source vers la destination.

Dans les algorithmes précédemment décrits l'existence des liens et les caractéristiques des interfaces sont diffusées dans le réseau. Dans un réseau qui serait « presque homogène » mais où certains relais ne possèdent pas toutes les interfaces du réseau, il peut être avantageux de rapporter uniquement la non existence des interfaces manquantes.

Une première variante de l'invention peut utiliser un mode de routage de type routage par la source (source routing). Dans ce cas il n'est plus nécessaire de diffuser les routes d'interface satisfaisant la condition C ni même d'utiliser des règles de calcul coordonné pour calculer ces routes à l'identique dans chaque relais. Lors de l'émission d'un paquet par un relais destiné à un relais distant, le relais émetteur reporte la route d'interface satisfaisant la condition C dans l'entête du paquet à router et ce dernier sera ensuite relayé par les noeuds intermédiaires sur la route suivant la technique classique du routage par la source. Un avantage de cette variante est qu'elle permet au noeud source de changer à son gré les routes d'interfaces choisies et satisfaisant la condition C.

Une seconde variante de l'invention pourra se baser sur un protocole réactif. Un noeud qui ne dispose pas de la route vers un autre noeud du réseau diffuse dans le réseau un paquet de recherche de route vers le noeud destinataire. Lorsque le destinataire reçoit cette requête, il retourne une réponse en utilisant le chemin inverse du chemin de propagation de la requête. Pour implémenter l'invention, il faut d'abord que les noeuds du réseau diffusent le message de recherche de route sur toutes leurs interfaces. Il convient ensuite que le noeud destinataire dispose dans le message de recherche de route des informations sur les caractéristiques des interfaces des routes que la requête a prises pour l'atteindre. Pour atteindre cet objectif, le message de recherche de route devra « accumuler » sur son cheminement les caractéristiques des interfaces utilisées.
Cette étape permet d'acquérir les liens entre relais et les caractéristiques des interfaces relatives à ces liens, en effet plusieurs paquets de requête de route aboutissent en principe au noeud destinataire.

Le noeud destinataire pourra facilement chercher parmi les routes d'interface qui lui seront rapportées dans les messages de recherche de route qui lui arrivent une route d'interface satisfaisant la condition C.

Après sélection, le destinataire peut alors renvoyer au noeud source comme réponse à sa requête une route utilisant des interfaces d'émission indépendantes sur toute ou partie de celle-ci. Cette étape correspond au choix d'une route vérifiant la condition C. Il devra renvoyer cette route au noeud source. Cette route pourra être enregistrée lorsque le noeud destination renvoie sa réponse au noeud source ; la route inverse de celle empruntée par le paquet sera alors enregistrée en saut par saut. Le protocole de routage pourra alors fonctionner en saut par saut. Il est également possible qu'il n'y ait pas enregistrement de la route de réponse lorsque la destination renvoie sa réponse au noeud source. Dans ce cas la destination devra envoyer l'intégralité de la route d'interface au noeud source qui pourra alors utiliser cette route en mode routage source.

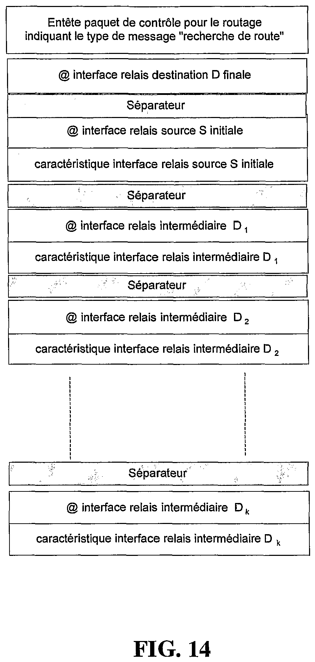

Sur la figure 14 est représenté un format possible pour le paquet de requête de route. Nous observons que ce paquet accumule lors de la progression de ce dernier les différentes interfaces d'émission utilisée et les caractéristiques de celles-ci. Le relais source peut diffuser cette requête sur toutes ses interfaces. Suivant le chemin pris par ces différentes requêtes, ces dernières vont se compléter en conséquence et donc de façon différente.

Nous pourrions comme dans le cas des protocoles réactifs tirer avantage de l'homogénéité du réseau pour simplifier la phase d'acquisition des caractéristiques des interfaces.

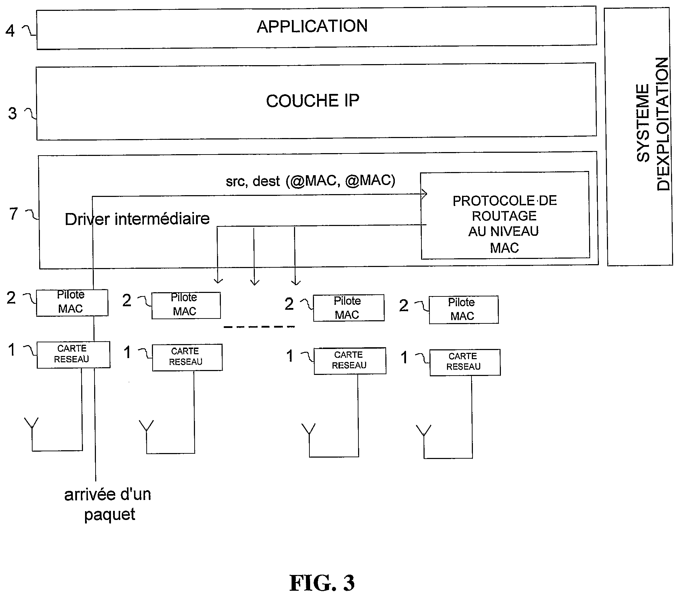

Dans la description nous avons proposé une architecture fonctionnant au niveau réseau (niveau 3) avec en principe des adresses IP comme base du routage. L'invention fonctionne aussi au niveau 2 (niveau MAC), le routage peut alors s'effectuer dans un driver intermédiaire 7 de la figure 3. Dans ce mode de réalisation de l'invention les interfaces sont repérées par des adresses IEEE. L'acquisition des liens et le choix des routes se fait de la même façon que dans le cas où les interfaces sont repérées par des adresses IP. Toutes les variantes de l'invention décrites au niveau réseau pourraient s'utiliser au niveau 2 avec des adresses IEEE ou avec tout autre type d'adresse.

## Revendications

1. Procédé de détermination d'une route et de relayage de données entre un noeud source et un noeud destinataire dans un réseau de données comprenant une pluralité de noeuds, chaque noeud dudit réseau comprenant une pluralité d'interfaces, chaque interface étant repérée par une adresse, une couche réseau et un système d'exploitation, dans lequel un noeud diffuse au sein d'un message dans le réseau, en sus de la liste de ses voisins, ou d'un sous ensemble, la liste des interfaces qui permettent de réaliser un lien avec ce voisin ainsi que la caractéristique de ces interfaces, ladite caractéristique comportant toute information susceptible de permettre de valider si les interfaces sur une route sont indépendantes, une interface étant indépendante d'une autre interface lorsque ces deux interfaces peuvent transmettre simultanément ; comprenant

   une étape d'acquisition des liens entre ladite pluralité d'interfaces desdits noeuds du réseau ainsi que des caractéristiques de ladite pluralité d'interfaces correspondant auxdits liens, lesdits liens définissant une pluralité de routes d'interface entre ledit noeud source et ledit noeud destinataire, et, **caractérisé en ce qu'**il comprend

   au niveau de chaque noeud, calculer, à réception des dits messages diffusés, pour tout couple de noeuds du réseau, les routes d'interface susceptibles de joindre les deux noeuds dudit couple et satisfaisant la condition C selon laquelle toute paire d'interfaces sur une partie de la route d'interface entre lesdits deux noeuds est constituée d'interfaces indépendantes ;
   puis,
   lors de la transmission d'un paquet du noeud source initial vers le noeud de destination finale, une étape consistant à déterminer, au niveau de chacun des noeuds l'interface de relayage capable de fournir pour ledit paquet en transit d'un relais source vers un relais destination, une route d'interface satisfaisant la condition C, et
   de transmission du paquet sur l'interface ainsi déterminée.

2. Procédé selon la revendication 1, comprenant en outre une étape de diffusion par un noeud donné des routes d'interface vérifiant la condition C pour lesquelles ledit noeud donné est noeud source.

3. Procédé selon l'une quelconque des revendications précédentes, dans lequel lesdites caractéristiques des interfaces comprennent au moins une caractéristique choisie parmi la fréquence d'émission, la polarisation d'émission, la modulation, la séquence d'étalement de spectre, la position du noeud et l'angle de transmission.

4. Procédé selon la revendication 1, dans lequel l'étape d'acquisition comprend pour chaque noeud, une sous étape de réception d'un message comprenant la liste des interfaces voisines de chaque interface de chaque noeud du réseau ayant un lien symétrique avec ladite interface ainsi que les caractéristiques desdites interfaces et une étape d'émission de la liste de chaque interfaces dudit noeud ainsi que des interfaces voisines audit noeud ainsi que leurs caractéristiques.

5. Procédé selon la revendication 1 ou la revendication 3, dans lequel lesdites caractéristiques comprennent la fréquence d'émission et dans lequel, on réalise en outre une étape consistant à tester si les fréquences d'émission d'au moins une paire d'interfaces d'émission de ladite route sont suffisamment éloignées pour que les transmissions puissent être simultanées.

6. Procédé selon la revendication 1 ou la revendication 3, dans lequel lesdites caractéristiques comprennent la polarisation ou le code d'étalement de spectre et dans lequel, on réalise en outre une étape consistant à tester si les polarisations ou les codes d'étalements de spectre d'au moins une paire d'interfaces d'émission de ladite route sont orthogonales de sorte que les transmissions puissent être simultanées.

7. Procédé selon la revendication 1 ou la revendication 3, dans lequel lesdites caractéristiques comprennent la localisation et dans lequel, on réalise en outre une étape consistant à tester si la localisation d'au moins une paire d'interfaces d'émission de ladite route est telle que les transmissions puissent être simultanées par réutilisation spatiale.

8. Procédé selon la revendication 1 dans lequel l'acquisition du liens est réalisée par la combinaison d'un protocole de routage de type état des liens et de la diffusion des caractéristiques des interfaces de l'ensemble des noeuds dudit réseau.

9. Procédé selon la revendication 1 dans lequel ledit réseau est un réseau homogène, et dans lequel ladite étape d'acquisition comprend l'acquisition d'un lien unique entre noeuds voisins dudit réseau homogène.

10. Procédé selon la revendication 1 dans lequel l'étape d'acquisition comprend au moins une sous-étape consistant à acquérir la caractéristique de l'interface permettant l'accessibilité à un sous réseau IP en complémentant un message annonçant le sous réseau par la caractéristique de l'interface d'accès.

**Patentansprüche**

1. Verfahren zum Bestimmen einer Route und zum Weiterleiten von Daten zwischen einem Quellknoten und einem Zielknoten in einem Datennetzwerk, das eine Vielzahl von Knoten umfasst, wobei jeder Knoten des Netzwerks eine Vielzahl von Schnittstellen umfasst, wobei jede Schnittstelle mit einer Adresse, einer Netzwerkschicht und einem Betriebssystem ausgewiesen ist, wobei ein Knoten innerhalb einer Nachricht im Netzwerk neben der Liste seiner Nachbarn oder eines Teilsatzes die Liste der Schnittstellen, die es ermöglichen, eine Verbindung mit diesem Nachbarn auszuführen, sowie die Charakteristik dieser Schnittstellen verbreitet, wobei die Charakteristik jede Information umfasst, die es ermöglichen kann zu validieren, ob die Schnittstellen auf einer Route unabhängig sind, wobei eine Schnittstelle von einer anderen Schnittstelle unabhängig ist, wenn diese zwei Schnittstellen zeitgleich übertragen können; umfassend
einen Schritt des Erfassens der Verbindungen zwischen der Vielzahl von Schnittstellen der Knoten des Netzwerks sowie der Charakteristiken der Vielzahl von Schnittstellen, die den Verbindungen entsprechen, wobei die Verbindungen eine Vielzahl von Schnittstellenrouten zwischen dem Quellknoten und dem Zielknoten definieren, und **dadurch gekennzeichnet, dass** es umfasst
bei Empfang der verbreiteten Nachrichten, Berechnen, auf Ebene jedes Knotens für jedes Knotenpaar des Netzwerks, der Schnittstellenrouten, die die zwei Knoten des Paares miteinander verbinden können und die die Bedingung C erfüllen, der gemäß jedes Schnittstellenpaar auf einem Teil der Schnittstellenroute zwischen den zwei Knoten aus unabhängigen Schnittstellen besteht;
und anschließend
bei der Übertragung eines Pakets vom ursprünglichen Quellknoten zum endgültigen Zielknoten, einen Schritt, der darin besteht, auf Ebene jedes der Knoten die Weiterleitungsschnittstelle zu bestimmen, die in der Lage ist, für das Paket auf dem Weg von einem Quellrelais zu einem Zielrelais eine Schnittstellenroute zu liefern, die die Bedingung C erfüllt, und
des Übertragens des Pakets über die so bestimmte Schnittstelle.

2. Verfahren nach Anspruch 1, weiter einen Schritt des Verbreitens, durch einen gegebenen Knoten, der die Bedingung C verifizierenden Schnittstellenrouten umfassend, für die der gegebene Knoten ein Quellknoten ist.

3. Verfahren nach einem der vorstehenden Ansprüche, wobei die Charakteristiken der Schnittstellen mindestens eine Charakteristik umfassen, ausgewählt aus der Sendefrequenz, der Sendepolarisation, der Modulation, der Spektrumspreizsequenz, der Position des Knotens und dem Übertragungswinkel.

4. Verfahren nach Anspruch 1, wobei der Schritt des Erfassens für jeden Knoten einen Teilschritt des Empfangens einer Nachricht, die die Liste der benachbarten Schnittstellen jeder Schnittstelle jedes Knotens des Netzwerks, welche eine symmetrische Verbindung mit der Schnittstelle aufweisen, sowie die Charakteristiken der Schnittstellen umfasst, und einen Schritt des Sendens der Liste jeder Schnittstelle des Knotens sowie der zum Knoten benachbarten Schnittstellen sowie deren Charakteristiken umfasst.

5. Verfahren nach Anspruch 1 oder Anspruch 3, wobei die Charakteristiken die Sendefrequenz umfassen, und wobei weiter ein Schritt ausgeführt wird, der darin besteht zu testen, ob die Sendefrequenzen von mindestens einem Sendeschnittstellenpaar der Route ausreichend weit entfernt sind, damit die Übertragungen zeitgleich sein können.

6. Verfahren nach Anspruch 1 oder Anspruch 3, wobei die Charakteristiken die Polarisation oder den Spektrumspreizcode umfassen, und wobei weiter ein Schritt ausgeführt wird, der darin besteht zu testen, ob die Polarisationen oder die Spektrumspreizcodes von mindestens einem Sendeschnittstellenpaar der Route orthogonal sind, sodass die Übertragungen zeitgleich sein können.

7. Verfahren nach Anspruch 1 oder Anspruch 3, wobei die Charakteristiken die Lokalisation umfassen, und wobei weiter ein Schritt ausgeführt wird, der darin besteht zu testen, ob die Lokalisation von mindestens einem Sendeschnittstellenpaar der Route derart ist, dass die Übertragungen durch räumliche Wiederverwendung zeitgleich sein können.

**8.** Verfahren nach Anspruch 1, wobei das Erfassen der Verbindungen über die Kombination aus einem Routingprotokoll vom Typ Link State, und der Verbreitung der Charakteristiken der Schnittstellen der Gesamtheit der Knoten des Netzwerks ausgeführt wird.

**9.** Verfahren nach Anspruch 1, wobei das Netzwerk ein homogenes Netzwerk ist, und wobei der Schritt des Erfassens das Erfassen einer einzigen Verbindung zwischen benachbarten Knoten des homogenen Netzwerks umfasst.

**10.** Verfahren nach Anspruch 1, wobei der Schritt des Erfassens mindestens einen Teilschritt umfasst, der darin besteht, die Charakteristik der Schnittstelle, die den Zugang zu einem IP-Teilnetzwerk ermöglicht, durch Komplementieren einer das Teilnetzwerk ankündigenden Nachricht mit der Charakteristik der Zugangsschnittstelle zu erfassen.

## Claims

**1.** Method for determining a route and data relay between a source node and a destination node in a data network comprising a plurality of nodes, each node of said network comprising a plurality of interfaces, each interface being located by an address, a network layer and an operating system, wherein a node diffuses within a message in the network, in addition to the list of its neighbours, or a subset, the list of interfaces that make it possible to create a link with this neighbour as well as the characteristic of these interfaces, said characteristic comprising any information that can make it possible to validate if the interfaces on a route are independent, an interface being independent from another interface when these two interfaces can transmit simultaneously; comprising

a step of acquiring links between said plurality of interfaces of said nodes of the network as well as characteristics of said plurality of interfaces corresponding to said links, said links defining a plurality of interface routes between said source node and said destination node, and, **characterised in that** it comprises

on each node, calculating, upon reception of said diffused messages, for any pair of network nodes, the interface routes that can join the two nodes of said pair and which satisfy the condition C according to which any pair of interfaces on a portion of the interface route between said two nodes is comprised of independent interfaces; then,

during the transmission of a packet from the initial source node to the final destination node, a step consisting in determining, on each one of the nodes the relay interface that can supply for said packet in transit from a source relay to a destination relay, an interface route that satisfies the condition C, and packet transmission on the interface determined as such.

**2.** Method according to claim 1, further comprising a step of diffusion via a given node of the interface routes satisfying the condition C for which said given node is the source node.

**3.** Method according to any preceding claim, wherein said characteristics of the interfaces comprise at least one characteristic chosen from the emission frequency, the emission polarisation, the modulation, the spectrum spreading sequence, the position of the node and the transmission angle.

**4.** Method according to claim 1, wherein the step of acquisition comprises for each node, a substep of receiving a message comprising the list of neighbouring interfaces of each interface of each node of the network having a line symmetric with said interface as well as the characteristics of said interfaces and a step of emission of the list of each interface of said node as well as the neighbouring interfaces to said node as well as their characteristics.

**5.** Method according to claim 1 or claim 3, wherein said characteristics comprise the emission frequency and wherein, a step is further carried out consisting in testing if the emission frequencies of at least one pair of emission interfaces of said route are sufficiently separated so that the transmissions can be simultaneous.

**6.** Method according to claim 1 or claim 3, wherein said characteristics comprise the polarisation or the spectrum spreading code and wherein, a step is furthermore carried out consisting in testing if the polarisations or the spectrum spreading codes of at least one pair of emission interfaces of said route are orthogonal in such a way that the transmissions can be simultaneous.

**7.** Method according to claim 1 or claim 3, wherein said characteristics comprise the location and wherein, a step is furthermore carried out consisting in testing if the location of at least one pair of emission interfaces of said route is such that the transmission can be simultaneous via spatial re-use.

**8.** Method according to claim 1 wherein the acquisition of the links is carried out via the combination of a routing protocol of the status type of the links and of the diffusion of the characteristics of the interfaces of all of the nodes of said network.

**9.** Method according to claim 1 wherein said network is a homogenous network, and wherein said step of acquisition comprises the acquisition of a single link between neighbouring nodes of said homogenous network.

**10.** Method according to claim 1 wherein the step of acquisition comprises at least one substep consisting in acquiring the characteristic of the interface allowing for the accessibility to an IP subnet by supplementing a message announcing the subnet by the characteristic of the access network.

4 ⌇ | APPLICATION |

3 ⌇ | COUCHE RESEAU |

2 ⌇ | Pilote MAC | 2 ⌇ | Pilote MAC | ---------- 2 ⌇ | Pilote MAC |

1 ⌇ | CARTE RESEAU | 1 ⌇ | CARTE RESEAU | ——— 1 ⌇ | CARTE RESEAU |

SYSTEME D'EXPLOITATION

## FIG. 1

APPLICATION 4

DEMON DE
ROUTAGE 5

3

IP, UDP, TCP

TABLE DE
ROUTAGE 6

2 Pilote MAC Pilote MAC Pilote MAC

1 CARTE RESEAU CARTE RESEAU CARTE RESEAU

**FIG. 2**

APPLICATION

COUCHE IP

Driver intermédiaire

src, dest (@MAC, @MAC)

PROTOCOLE·DE
ROUTAGE
AU NIVEAU
MAC

SYSTEME
D'EXPLOITATION

Pilote
MAC

Pilote
MAC

Pilote
MAC

Pilote
MAC

CARTE
RESEAU

CARTE
RESEAU

CARTE
RESEAU

CARTE
RESEAU

arrivée d'un
paquet

**FIG. 3**

**FIG. 4**

Route de relais : 192.168.0.1,192.168.1.1,192.168.2.1,192.168.3.1

Route de d'interfaces :
192.168.0.1,192.168.1.1,192.168.1.2,192.168.2.2,192.168.2.3,192.168.2.3,192.168.3.3

**FIG. 5**

**FIG 6**

**FIG 7**

Entête paquet de contrôle pour le routage
indiquant le type de message "état des
liens généralisé"

Adresse interface 1 du relais
et caratéristiques de l'interface 1

Séparateur 1

Adresse des interfaces (des voisins)
ayant un lien symétrique avec l'interface 1
et caratéristiques de ces interfaces

Séparateur 2

Adresse interface i du relais
et caratéristiques de l'interface i

Séparateur i

Adresse des interfaces (des voisins )
ayant un lien avec l'interface i
et caratéristiques de ces interfaces

# FIG. 8

| Entête paquet de contrôle pour le routage indiquant le type de message "route d'interface" |
|---|
| @ interface relais source S |
| @ interface relais intermédiaire ˙ |

| @ interface relais intermédiaire |
|---|
| @ interface relais destinataire $D_1$ |
| Séparateur |

| Séparateur |
|---|
| @ interface relais source S |
| @ interface relais intermédiaire |

| @ interface relais intermédiaire |
|---|
| @ interface relais destinataire $D_M$ |

# FIG 9

Quelles sont les interfaces source
initiale et destination finale du paquet ?    ∿ 200

Rechercher dans la table de routage la
route d'interface pour le couple
interfaces source initiale et destination    ∿ 210
finale du paquet

Relayer le paquet sur l'interface et vers
l'interface du relais suivant sur la
route d'interface trouvée dans la table    ∿ 220
de routage

# FIG. 10

Entête paquet "OLSR "
type de paquet "MID"

Adresse principale

Adresse secondaire 1

Adresse secondaire k

Séparateur

Caract adresse principale

Caract adresse secondaire 1

Caract adresse secondaire k

k < n

# FIG. 11

**FIG 12**

Quelle est l'interface i sur laquelle
le paquet vient d'arriver ?

300

Rechercher dans la table de routage,
une route vers la destination finale qui utilise l'interface
d'envoi $\sigma(i)$. j sera l'adresse de l'interface vers la
destination finale

310

Relayer le paquet sur l'interface $\sigma(i)$ vers l'adresse j

320

**FIG. 13**

| Entête paquet de contrôle pour le routage indiquant le type de message "recherche de route" |
|---|
| @ interface relais destination D finale |
| Séparateur |
| @ interface relais source S initiale |
| caractéristique interface relais source S initiale |
| Séparateur |
| @ interface relais intermédiaire $D_1$ |
| caractéristique interface relais intermédiaire $D_1$ |
| Séparateur |
| @ interface relais intermédiaire $D_2$ |
| caractéristique interface relais intermédiaire $D_2$ |

| Séparateur |
|---|
| @ interface relais intermédiaire $D_k$ |
| caractéristique interface relais intermédiaire $D_k$ |

**FIG. 14**

24

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2778809

**Littérature non-brevet citée dans la description**

- **S. NARAYANASWAMY ; V KAWADIA ; P KUMAR.** The COMPOW protocol for power control in ad hoc networks : Theory, architecture, algorithm, implementation and experimentation. *European Wireless,* Février 2002
- **GUPTA ; KUMAR.** The capacity of wireless networks. *IEEE Transactions on Information Theory,* 2000, vol. 46 (2), 388-404
- **SU YI ; Y. PEI ; S. KALYANARAMAN.** On the Capacity Improvement of Ad Hoc Wireless Networks Using Directional Antennas. *MobiHoc 2003,* Juin 2003

- Routing in multi-radio, multi-hop wireless mesh networks'' proceedings of the 10th annual international conférence on mobile computing and networking, MOBICOM 2004, Philadelphia PA, Sept. 26-Oct 1, 2004. **DRAVES et al.** annual international conférence on mobile computing and networking. ACM, 26 Septembre 2004, vol. 10, 114-128
- **E. M. BELDING-ROYER ; S. R. DAS.** *RFC 3561 de l'IETF Ad hoc On-Demand Distance Vector (AODV) Routing de C. E. PERKINS,* Juillet 2003
- **T. CLAUSEN ; P. JACQUET ; A. LAOUITI ; P. MINET ; P. MÜHLETHALER ; A. QAYYUM ; L. VIENNOT.** Optimized Link State Routing Protocol OLSR. *RFC 3626 de l'IETF*
- **MM. BERTSEKAS ; GALLAGER.** Data Networks. Prentice Hall, 1987